# EUROPEAN PATENT APPLICATION

(11) **EP 1 364 929 A1**
(43) Date of publication of application: **26.11.2003**
(21) Application number: 01980901.1
(22) Date of filing: 25.10.2001
(51) Int. Cl.: C04B 35/80

(54) **METHOD FOR PRODUCING SIC FIBER-REINFORCED SIC COMPOSITE MATERIAL HAVING EXCELLENT FRACTURE TOUGHNESS**

(30) Priority: 27.02.2001 JP 2001054149
(71) Applicant: JAPAN SCIENCE AND TECHNOLOGY CORPORATION, Kawaguchi-shi, Saitama 332-0012 (JP)
(72) Inventor: KOHYAMA, Akira, Inst. Advanced Energy Kyoto Univ., Uji-shi, Kyoto 611-0011 (JP); KOTANI, Masaki, Inst. Advanced Energy Kyoto Univ., Uji-shi, Kyoto 611-0011 (JP); KATOH, Yutai, Inst. Advanced Energy Kyoto Univ., Uji-shi, Kyoto 611-0011 (JP)
(74) Representative: Müller-Boré & Partner Patentanwälte
(86) International application number: JP0109362
(87) International publication number: WO02068362

(57) **Abstract**

Polymeric slurry is prepared by uniformly dispersing fine SiC particles in polyvinyl-silane (PVS), which comprises the structural units (a) and (b) at an a/b ratio of 1, at a ratio of 50-70 mass %. A SiC fiber preform is impregnated with the polymeric slurry and preheat-treated at 300-400°C in an argon atmosphere to moderate PVS to a viscous or semi-cured state. Thereafter, the preheat-treated SiC fiber preform is pyrolyzed at a temperature of 1000°C or higher in an argon atmosphere under application of a unidirectional pressure of 2-10 MPa. Since internal stress is relaxed during pressurized pyrolysis, a product is dense SiC fiber-reinforced SiC-matrix composite good of mechanical strength and toughness with large fracture work. The SiC composite may be further densified and improved in fracture toughness by repetition of impregnation with sole PVS and pressure-less pyrolysis.

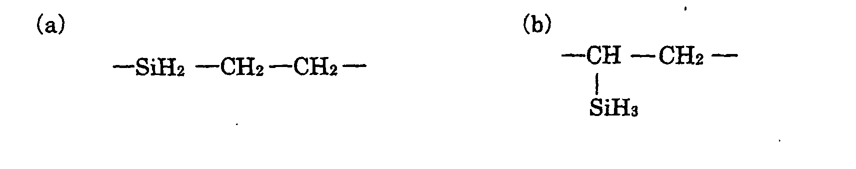

## Description

### TECHNICAL FIELD OF THE INVENTION

The present invention relates to a method of manufacturing SiC composite, which is useful as structural members of aircraft, spacecraft, nuclear reactors, nuclear fusion power reactors or the like exposed to a high-temperature atmosphere or neutron radiation, excellent in fracture toughness, heat-resistance and irradiation-resistance.

### BACKGROUND OF THE INVENTION

Various ceramics such as SiC and Si₃N₄, which are good of heat-resistance, corrosion-resistance and mechanical strength, have been developed so far for structural members of aircraft, spacecraft, nuclear reactors or the like driven under severe conditions. Such ceramics are also used as members of heat exchangers or mechanical seals driven under heavy-duty conditions. Especially, SiC is a suitable material in various industrial fields from aerospace to nuclear power generation, due to its excellent heat-and wear-resistance as well as chemical stability and reduced-activation property in a nuclear environment.

SiC is brittle itself, despite of good high-temperature property with a sublimation temperature higher than 2600°C. In order to overcome poor toughness, SiC composite reinforced with SiC fibers has been proposed, as disclosed in A.Lacombe and C.Bonnet, 2nd Int. Aerospace Planes Conf. Proc. AIAA-90-5208(1990) and C. W. Hollenberg et al., J. Nucl. Mat., 219, (1995)70-86.

A representative method for production of fiber-reinforced SiC-matrix composite is a polymer impregnation and pyrolysis process, wherein a SiC fiber preform is impregnated with a polymeric SiC precursor, which is converted to SiC matrix by pyrolysis. The polymer impregnation and pyrolysis process, which resembles a conventional FRP (fiber-reinforced plastics) manufacturing process in impregnation of a fiber preform with liquid material, is suitable for production of complicated parts with high freedom on shape and size.

However, a polymeric SiC precursor for impregnation of a SiC fiber preform substantially reduces its density and volume with weight loss during pyrolysis. Pyrolyzed products partially remain as bubbles in SiC composite. Increase of residual bubbles (in other words, increase of porosity) is unfavorable for improvement of toughness by insertion of SiC fiber as reinforcement, and a product does not fulfil required properties.

Polycarbosilane has been used so far as a polymeric SiC precursor. However, polycarbosilane is pyrolyzed to a product rigidly bonded to SiC filaments. Rigid bonding does not allow relative slipping motion between SiC filaments and SiC matrix essential for realization of toughening action.

Although interfacial property between SiC filaments and SiC matrix is controlled by formation of an interfacial layer such as C or BN, manufacturing conditions shall be determined accounting environmental capability of the interfacial layer. In fact, when a polymer-impregnated SiC fiber preform is heated in presence of an interfacial layer such as C or BN at a boundary between SiC filaments and SiC matrix, C or BN is oxidized. The generated oxide is removed from the boundary or left as such, resulting in poor toughness of SiC composite.

### SUMMARY OF THE INVENTION

The present invention aims at provision of dense SiC fiber-reinforced SiC-matrix composite good of fracture toughness. An object of the present invention is to manufacture SiC fiber-reinforced SiC-matrix composite by pyrolysis of a polymer-impregnated SiC fiber preform under conditions for relaxation of an internal stress with a pressure controlled at a level to suppress extrusion of a polymeric SiC precursor out of the SiC fiber preform without occurrence of cracks in a pyrolyzed body.

The present invention proposes a new method of manufacturing SiC fiber-reinforced SiC-matrix composite. In the proposed method, polymeric slurry is prepared by uniformly dispersing fine SiC particles in polyvinyl-silane (PVS) having the under-mentioned structural units (a) and (b) with an a/b ratio of 1. A SiC fiber preform is impregnated with the polymeric slurry and preheat-treated at 300-400°C to moderate PVS to a viscous or semi-cured state. Thereafter, the preheat-treated SiC fiber preform is pyrolyzed under application of a unidirectional pressure of 2-10 MPa.

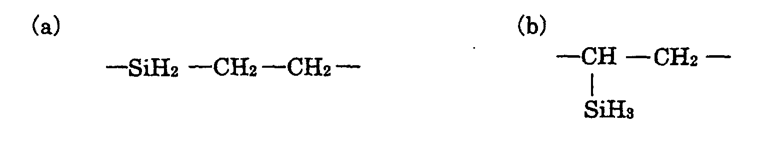

The SiC fiber-reinforced SiC-matrix composite is further densified and improved in fracture toughness by repetition of impregnation with sole PVS and pressure-less pyrolysis.

### BRIEF DESCRIPTION OF THE DRAWING

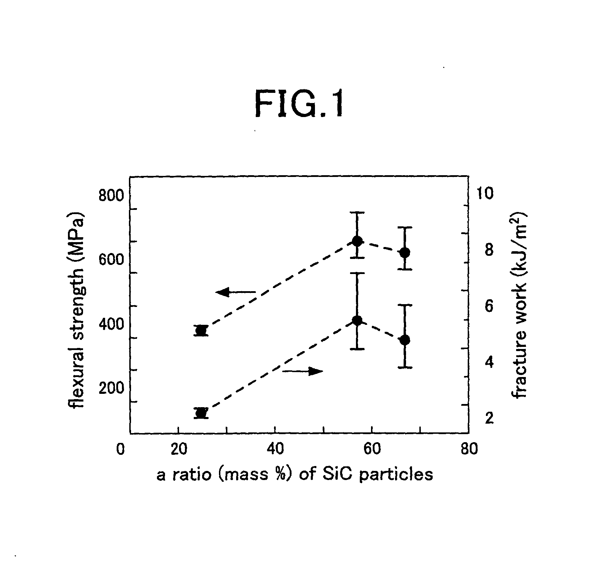

Fig. 1 is a chart showing effects of mass fraction of fine SiC particles on flexural strength and fracture work of a pyrolyzed body.

### PREFERRED EMBODIMENTS OF THE INVENTION

Dispersion of fine SiC particles in polymeric slurry as a SiC precursor reduces volumetric shrinkage of SiC matrix, in a polymer impregnation and pyrolysis process for manufacturing SiC fiber-reinforced SiC-matrix composite. Reduction of volumetric shrinkage means densification of the pyrolyzed body. Since the impregnated SiC fiber preform is pyrolyzed in absence of an interfacial layer such as S or BN at a boundary between SiC filaments and SiC matrix, intrinsic property, (e.g. excellent oxidation resistant) of SiC is realized in the pyrolyzed body. Omission of the interfacial layer is also advantageous for simplification of a manufacturing process.

SiC fibers available on the market are synthesized from polycarbosilane. If SiC matrix is made from the same polymer, it is rigidly bonded with SiC filaments. On the other hand, the defined PVS having the structural units (a) and (b) at an a/b ratio of 1 is a substance which is affinitive with SiC filaments but has molecular structure different from an original polymer for SiC filaments. Moreover, PVS serves as a polymeric SiC precursor which is gradually cured during heat treatment in an inert gas atmosphere, so as to control its cured state with ease.

When a mixture of PVS with fine SiC particles is baked, larger volumetric shrinkage occurs under the condition that the polymer is fixed at a relative position, as compared with polycarbosilane. Such shrinkage causes formation of fine pores of several tens to several hundreds nm in size between SiC particles. As a result, a pyrolyzed body is improved in fracture toughness due to release of internal stress from its structure.

The effect of SiC particles on fracture toughness is noted by use of polymeric slurry to which fine SiC particles are dispersed at a ratio of 50-70 mass %. If the polymeric slurry contains SiC particles less than 50 mass %, a pyrolyzed body is insufficiently strengthened without toughening action derived from slippage of SiC filaments from SiC matrix. Excessive addition of SiC particles more than 70 mass % on the contrary unfavorably increases viscosity of polymeric slurry. Increase of viscosity impedes infiltration of the polymeric slurry into pores between SiC filaments, resulting in poor strength of a pyrolyzed product, as shown in Fig. 1.

SiC particles to be dispersed in PVS is preferably of 0.3 µm or less in size. Particle size above 0.3 µm causes irregular dispersion of SiC particles in a SiC fiber preform due to poor infiltration of SiC particles into pores between SiC filaments. However, too fine SiC particles thickens polymeric slurry to a level inappropriate for uniform dispersion of SiC particles.

After a SiC fiber preform is impregnated with polymeric slurry prepared by dispersing fine SiC particles in PVS, the impregnated SiC fiber preform is pyrolyzed with a pressure. PVS is ceramized to SiC as a matrix-forming material during pressurized pyrolysis. In prior to pressurized pyrolysis, viscosity of PVS may be conditioned to a value enough for inhibiting extrusion of the polymeric SiC precursor from the SiC fiber preform during pressurized pyrolysis, since viscosity of PVS is gradually raised in response to its cured state. An effect of pressurized pyrolysis on properties (i.e. density, mechanical strength and heat-resistance) of SiC fiber-reinforced SiC-matrix composite is efficiently optimized by viscosity control of PVS.

Viscosity of polymeric slurry is adjusted to a value suitable for suppressing extrusion of the polymeric slurry from a SiC fiber preform by preheat-treating the polymeric slurry to a viscous or semi-cured state at 300-400°C. The polymeric slurry preheat-treated at a temperature below 300°C is still too fluid, so that extrusion of the polymeric slurry from the SiC fiber preform is not completely suppressed during pressurized pyrolysis. However, PVS is excessively cured to a non-plastic state by preheat-treating at a temperature above 400°C. Such non-plastic SiC precursor would be destroyed during pressurized pyrolysis. In this sense, it is preferable to hold a polymer-impregnated SiC fiber preform at 300-400°C for 10 minutes or so.

A cured state of a preheat-treated polymeric SiC precursor together with a pressure applied to a SiC fiber preform during pyrolysis put substantial influences on density and strength of a pyrolyzed body. Therefore, a cured state of a preheat-treated polymeric SiC precursor and a pressure applied to a SiC fiber preform during pyrolysis are properly controlled in response to required property of the SiC fiber-reinforced SiC-matrix composite.

A pressure applied to a polymer-impregnated SiC fiber preform during pyrolysis is determined within a range of 2-10 MPa for densification of the SiC composite without destruction. An effect of pressure-application on densification is noted at 2 MPa or more, but too large pressure (more than 10 MPa) deteriorates property of the SiC composite due to damages in SiC filaments.

A temperature and a pressure during pyrolysis are determined within ranges of 300-400°C and 2-10 MPa, respectively, for normal shape of SiC composite, but preferably changed in response to alignments of SiC filaments or shape of a product.

The impregnated SiC fiber preform is preferably pyrolyzed at 1000-1300°C in an argon atmosphere. If a pyrolysis temperature is below 1000°C, PVS is not completely ceramized due to insufficient pyrolysis. Incomplete ceramization means insufficient growth of SiC network and poor heat-resistance of fiber-reinforced SiC-matrix composite. If the impregnated SiC fiber preform is heated at a temperature higher than 1300°C, on the contrary, pyrolyzed products are violently crystallized and grown up to coarse grains. Excessive growth of crystal grains causes occurrence of cracks and decrease of strength.

Argon is used as an atmospheric gas for pyrolysis of the impregnated SiC fiber preform, in order to inhibit production of SiO₂ which unfavorably reduces strength of fiber-reinforced SiC-matrix composite. If the impregnated preform is pyrolyzed in an oxygen-containing atmosphere, Si-H bonds in PVS would be oxidized to SiO₂. If the impregnated preform is pyrolyzed in a nitrogen-containing atmosphere, nitrogen would be incorporated in PVS, resulting in generation of Si₃N₄. A vacuum atmosphere would put a large burden on a vacuum pump due for discharging massive gasses during pyrolysis.

Optimal conditions for pyrolysis of the impregnated SiC fiber preform are a heating temperature of 1200°C and a pressure of 5 MPa.

Other features of the present invention will be apparent from the following **Examples**.

### Example 1

Polymeric slurry was prepared by dispersing β-SiC particles of 0.3 µm in average size to PVS at a ratio of 57 mass %. Continuous SiC filaments of 14 µm in diameter were unidirectionally aligned to a SiC fiber sheet. After the SiC fiber sheet was sized to 40 mm in length and 20 mm in width, the polymeric slurry was dropped on the SiC fiber sheet to produce a polymer-impregnated SiC fiber sheet.

The polymer-impregnated SiC fiber sheet was preheat-treated up to 330°C at a heating rate of 300°C/h in an argon atmosphere, held at 330°C for 10 minutes and cooled down to an ambient temperature over 1 hour or longer. It was noted by observation of the preheat-treated SiC fiber composite that the polymer was semi-cured and integrated with the SiC sheet.

14 of the polymer-SiC fiber composite sheets were laminated to a preform of 2 mm in thickness. The preform was put in a carbon mold and located in an oven equipped with a carbon heater. The preform was heated up to 1200°C at a heating rate of 300°C/h under application of a unidirectional pressure of 5 MPa along its perpendicular direction in an argon atmosphere held at 1200°C for 10 minutes and then cooled down in a pressure-released state over 2 hours. A product was SiC fiber-reinforced SiC-matrix composite with porosity of 31%.

The SiC composite was further impregnated with sole PVS and pyrolyzed without a pressure at 1200°C. Impregnation with sole PVS and pressure-less pyrolysis were alternately repeated 6 times. Porosity of the SiC composite was reduced to 3% by repetition of the impregnation with sole PVS and pressure-less pyrolysis. The densified SiC fiber-reinforced SiC-matrix composite had flexural strength of 602 MPa and fracture work of 5.1 kJ/m². The value of fracture work was three times high as compared with SiC composite (1.72 kJ/m²) made from a SiC fiber preform impregnated with polymeric slurry dispersing β-SiC particles therein at a ratio of 25 mass % under the same conditions.

### EXAMPLE 2

Polymeric slurry was prepared by dispersing β-SiC particles of 0.3 µm in average size to PVS at a ratio of 67 mass%. Continuous SiC filaments of 14 µm in average diameter were unidirectionally aligned to a SiC fiber sheet. After the SiC fiber sheet was sized to 40 mm in length and 20 mm in width, the polymeric slurry was dropped on the SiC fiber sheet in an open atmosphere, to produce a polymer-impregnated SiC fiber sheet.

The polymer-impregnated SiC fiber sheet was heated up to 330°C at a heating rate of 300°C/h in an argon atmosphere, held at 330°C for 10 minutes and then cooled down to an ambient temperature over 1 hour or longer. It was noted by observation of the cooled SiC fiber sheet that the polymer was semi-cured and integrated with SiC filaments.

14 of the polymer-SiC fiber composite sheets were laminated to a preform of 2 mm in thickness. The preform was put in a carbon mold and located in an oven equipped with a carbon heater. The polymer-SiC fiber preform was heated up to 1200°C at a heating rate of 300°C/h in an argon atmosphere under application of a unidirectional pressure of 5 MPa along its perpendicular direction, held at 1200°C for 10 minutes and then cooled down in a pressure-released state over 2 hours or longer. A product was SiC fiber-reinforced SiC-matrix composite with porosity of 33%.

The SiC composite was further impregnated with sole PVS in vacuum and pyrolyzed without pressure at 1200°C. The impregnation with sole PVS and the pressure-less pyrolysis were alternately repeated 6 times. Porosity of the SiC composite was reduced to 5% by repetition of the impregnation with sole PVS and the pressure-less pyrolysis. The densified SiC composite had flexural strength of 575 MPa in average and fracture work of 4.3 kJ/m². The value of fracture work was 2.5 times high as compared with SiC composite (1.72 kJ/m²) made from a SiC fiber preform impregnated with polymeric slurry dispersing β-SiC particles therein at a ratio of 25 mass %.

### INDUSTRIAL APPLICABILITY OF THE INVENTION

In a method of manufacturing SiC fiber-reinforced SiC-matrix composite proposed by the present invention as above-mentioned, a SiC fiber preform is impregnated with thermosetting PVS suspending fine SiC particles therein and preheat-treated in prior to pressurized pyrolysis so as to moderate PVS to a viscous or semi-cured state. When the preheat-treated polymer-impregnated SiC fiber preform is pyrolyzed with a pressure, extrusion of the polymer from the SiC fiber preform is suppressed even under application of a pressure during pyrolysis. Consequently, SiC fiber-reinforced SiC matrix composite manufactured in this way is densified and improved in mechanical strength and toughness with large fracture work.

## Claims

1. A method of manufacturing tough SiC fiber-reinforced SiC-matrix composite, which comprises the steps of
preparing a polymeric slurry by uniformly dispersing fine SiC particles in polyvinyl-silane, which comprises the below-mentioned structural units (a) and (b) at an a/b ratio of 1, at a ratio of 50-70 mass %;
impregnating a SiC fiber preform with said polymeric slurry;
preheat-treating the polymer-impregnated SiC fiber preform at 300-400°C in an argon atmosphere so as to moderate said polyvinyl-silane to a viscous or semi-cured state; and
pyrolyzing the preheat-treated polymer-impregnated SiC fiber preform in an argon atmosphere under application of a unidirectional pressure of 2-10 MPa.

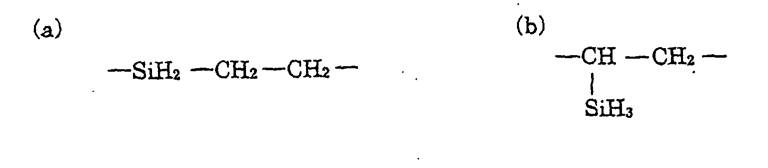

2. The method of manufacturing tough SiC fiber-reinforced SiC-matrix composite defined by Claim 1, wherein the polymeric slurry suspends SiC particles of 0.3 µm or less in size therein.

3. The method of manufacturing tough SiC fiber-reinforced SiC-matrix composite defined by Claim 1 or 2, wherein the polymer-impregnated SiC fiber preform is further subjected to repetition of impregnation with sole polyvinyl-silane and pressure-less pyrolysis after the pressurized pyrolysis.
